# EUROPEAN PATENT APPLICATION

(11) **EP 1 603 331 A1**
(43) Date of publication of application: **07.12.2005**
(21) Application number: 04708864.6
(22) Date of filing: 06.02.2004
(51) Int. Cl.: H04N 5/335

(54) **IMAGING DEVICE AND METHOD FOR DRIVING IMAGING DEVICE**

(30) Priority: 18.02.2003 JP 2003039102
(71) Applicant: SONY CORPORATION, Tokyo 141-0001 (JP)
(72) Inventor: NOGUCHI, Katsunori, c/o Sony Corporation, Tokyo 141-0001 (JP); HIROTA, Isao, c/o Sony Corporation, Tokyo 141-0001 (JP); YASUDA, Minoru, c/o Sony Corporation, Tokyo 141-0001 (JP); TOOYAMA, Takayuki, c/o Sony Corporation, Tokyo 141-0001 (JP); YAMAGISHI, Katsumi, c/o Sony Corporation, Tokyo 141-0001 (JP)
(74) Representative: Müller - Hoffmann & Partner
(86) International application number: PCT/JP2004/001287
(87) International publication number: WO 2004/075539

(57) **Abstract**

A configuration of an imaging device includes: an S/H circuit (9) which samples signal voltages read out from a plurality of charge-detecting circuits by a horizontal scanning circuit and output from an output amplifier (6), without the transfer of signal charges by a charge transfer portion; a memory 10 which stores signal voltages sampled by the S/H circuit (9) as memory voltages (Vm1 to Vm4); and a signal processing circuit (8) which executes predetermined signal processing, using signal voltages read out from the plurality of charge-detecting circuits by the horizontal scanning circuit and output from the output amplifier (6) and memory signals stored in the memory (10), with the transfer of signal charges read out from the photoelectric conversion portion to the charge transfer portion.

## Description

### TECHNICAL FIELD

The present invention relates to an imaging device which has a photoelectric conversion portion and a charge transfer portion, and to a drive method of an imaging device.

### BACKGROUND ART

As an imaging device, one in which signal charges read out from a plurality of photoelectric conversion portions arranged two-dimensionally in the form of a matrix are transferred in the vertical direction by means of a charge transfer portion, and after those signal charges are transferred in the horizontal direction, each signal charge is voltage-converted by a common charge-detecting means to be output is widely known.

Further, in recent years, an imaging device provided with a plurality of charge-detecting means which perform voltage-conversion on signal charges transferred in the vertical direction has been proposed as the one which enables an imaging device to be driven at high speed and so on (for example, Patent Literature 1). In this imaging device, signal charges transferred in the vertical direction by means of a vertical CCD (Charge Coupled Device) are voltage-converted by the charge-detecting means; signal voltages thus generated by the charge-detecting means are scanned and read out in order by scanning means; and these signal voltages read out are amplified by an output amplifier to be output.

### [Patent Literature 1]

Published Japanese Patent Application No. 2002-135656 (claim 1, FIG. 1)

### DISCLOSURE OF INVENTION

However, in the imaging device described in the above Patent Literature 1, since a plurality of charge-detecting means are provided, output errors occur in signal voltages due to dispersion in characteristics (particularly dispersion in gain) of each charge-detecting means and the signal voltages are read out with these output errors included. Therefore, even if exactly the same amount of signal charge is read out from each of photoelectric conversion means, there will be dispersion (level difference) with respect to output signal voltages finally obtained. As a result, noise in the form of stripes (vertical stripes or the like) may be generated in an output image.

In order to cope with the above, characteristics of each charge-detecting means may be adjusted separately to be the reference level at the time when signal voltages are output; however, as the number of charge-detecting means provided in one imaging device increases, processes required for the adjustment increase. Thus, in the current situation where a large number of charge-detecting means are used, procedures to be employed become extremely difficult in practice.

The present invention is made to solve the above-described problems, and is to provide an imaging device and a drive method of an imaging device, in which when a plurality of charge-detecting means are provided, output errors due to dispersion in characteristics of those charge-detecting means can appropriately be corrected.

An imaging device according to the present invention includes: a photoelectric conversion portion which photoelectrically converts light received; a charge transfer portion which transfers signal charges read out from the photoelectric conversion portion; a plurality of charge-detecting means which perform voltage-conversion on signal charges from the charge transfer portion; scanning means which read out signals voltage-converted by the plurality of charge-detecting means; output means which output signals read out by the scanning means; memory means which, without the transfer of signal charges by the charge transfer portion, store signals read out from the plurality of charge-detecting means by the scanning means and output from the output means; and signal processing means which, with the transfer of signal charges read out from the photoelectric conversion portions to the charge portions, execute predetermined signal processing using signals read out from the plurality of charge-detecting means by the scanning means and output by the output means and signals stored in the memory means.

In this imaging device, the level of signals read out from the plurality of charge-detecting means by the scanning means and output by the output means, without the charge transfer portions transferring signal charges, depends on dispersion in characteristics of those charge-detecting means, irrespective of the amount of signal charges read out from the photoelectric conversion portions. Therefore, signals to be stored in the memory means only include output errors due to dispersion in characteristics of those charge-detecting means. On the other hand, the level of signals read out from the plurality of charge-detecting means by the scanning means and output by the output means, with transferring signal charges read out from the photoelectric conversion portions to the charge transfer portions, depends on the amount of signal charges read out from the photoelectric conversion portion and on dispersion in characteristics of those charge-detecting means. Therefore, by executing predetermined signal processing by the signal processing means,using signals read out from the plurality of charge-detecting means by the scanning means and output by the output means and signals stored in the memory means, with transferring signal charges read out from the photoelectric conversion portion to the charge transfer portion, output error elements due to dispersion in characteristics of respective charge-detecting circuits can be removed from signal components output from the output means with signal charges being read out from the photoelectric conversion portions and with the charge transfer portions transferring signal charges.

A drive method of an imaging device according to the present invention is a drive method of an imaging device having a photoelectric conversion portion which photoelectrically converts light received, a charge transfer portion which transfers signal charges read out from the photoelectric conversion portion, a plurality of charge-detecting means which perform voltage-conversion on signal charges from the charge transfer portion, scanning means which read out signals voltage-converted by these plurality of charge-detecting means, and output means which output signals read out by this scanning means, including the processes of: storing signals read out from the plurality of charge-detecting means by the scanning means and output from the output means without the transfer of signal charges by the charge transfer portions; and executing predetermined signal processing, using signals read out from the plurality of charge-detecting means by the scanning means and output from the output means and signals stored in the storing process with the transfer of signal charges read out from the photoelectric conversion portions to the charge transfer portions.

In this drive method of an imaging device, the level of signals read out from the plurality of charge-detecting means by the scanning means and output from the output means, without the charge transfer portions transferring signal charges, depends on dispersion in characteristics of those charge-detecting means, irrespective of the amount of signal charges read out from the photoelectric conversion portions. Therefore, signals to be stored in the memory process only include output errors due to dispersion in characteristics of those charge-detecting means. On the other hand, the level of signals read out from the plurality of charge-detecting means by the scanning means and output from the output means, with transferring signal charges read out from the photoelectric conversion portion to the charge transfer portion, depends on the amount of signal charges read out from the photoelectric conversion portions and on dispersion in characteristics of those charge-detecting means. Accordingly, by executing predetermined signal processing in the signal processing process, using signals read out from the plurality of charge-detecting means by the scanning means and output from the output means and signals stored in the memory process, with transferring signal charges read out from the photoelectric conversion portion to the charge transfer portions, output error components due to dispersion in characteristics of respective charge-detecting circuits can be removed from signal components output by the output means with signal charges being read out from the photoelectric conversion portions and with the charge transfer portions transferring signal charges.

### BRIEF DESCRIPTION OF DRAWINGS

FIG. 1 is a schematic diagram showing an example of a configuration of an imaging device to which the present invention is applied;
FIG. 2 is a diagram showing a specific example of a configuration from charge-detecting circuits to an output amplifier;
FIG. 3 is a diagram showing an example of a configuration to correct the output level of a signal voltage;
FIG. 4 is a block diagram showing an example of a configuration for timing control;
FIG. 5 is a timing chart (first one) for explaining the operation of an imaging device;
FIG. 6 is a timing chart (second one) for explaining the operation of an imaging device;
FIG. 7 is a timing chart (third one) for explaining the operation of an imaging device; and
FIG. 8 is a diagram showing an example of a voltage level stored in a memory.

### BEST MODE FOR CARRYING OUT THE INVENTION

Hereinafter, an embodiment of the present invention is explained in detail when applied to an imaging device which employs an interline type transfer method, referring to the drawings; however, the present invention can also be applied to an imaging device which employs a frame transfer type transfer method.

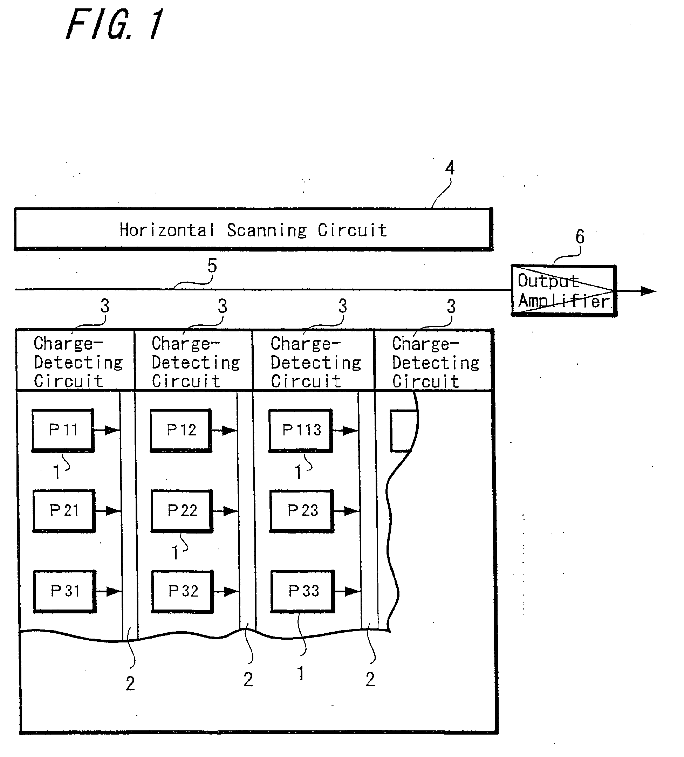

FIG. 1 is a schematic diagram showing an example of a configuration of an imaging device to which the present invention is applied. The imaging device shown in the diagram includes a plurality of photosensors 1, a plurality of charge transfer portions 2, a plurality of charge-detecting circuits 3, a horizontal scanning circuit 4 which serves as scanning means, a horizontal signal line 5, and an output amplifier 6 which serves as output means.

The plurality of photosensors 1 are disposed two-dimensionally in the form of a matrix. Each of photosensors 1 is equivalent to a photoelectric conversion portion which photoelectrically converts light received and is formed of a photodiode, for example. In FIG. 1, the positions of the photosensors 1, are represented by Pmn (P11, P12, P13, ···, P21, P22, P23, ···, P31, P32, P33, ···), where m rows are provided in the vertical direction and n columns are provided in the horizontal direction, respectively (both m and n are integers of one or above).

The plurality of charge transfer portions 2 are provided with respect to respective columns of photosensors 1 in the form of line each adjacent to the photosensors 1. Each of charge transfer portions 2 transfers in order signal charges read out from a photosensor 1 of each row in the vertical direction (line direction), and is formed of a vertical CCD having a CCD structure, for example.

The plurality of charge-detecting circuits 3 are provided with respect to each column (each line) of photosensors 1 in the form of a matrix, having a corresponding relation of 1:1 to the charge transfer portions 2. Each of the charge-detecting circuits 3 is equivalent to charge-detecting means and includes an FD (floating diffusion) amplifier and an FD reset transistor, for example. The charge-detecting circuit 3 is connected to one end of the charge transfer portion 2 (to the portion where vertical transfer ends). With performing voltage-conversion on signal charges read out from the corresponding charge transfer portion 2, each of the charge-detecting circuits 3 generates a signal voltage in accordance with the amount of the relevant signal charge.

The horizontal scanning circuit 4 selects the plurality of charge-detecting circuits 3 in order in a horizontal direction to sequentially read out signal voltages generated in each of the charge-detecting circuits 3 to the horizontal signal line 5. When reading out signal voltages from the charge-detecting circuits 3 to the horizontal signal line 5, the horizontal scanning circuit 4 outputs a horizontal scanning pulse in synchronization with a horizontal scanning period to the object charge-detecting circuit 3 from which a signal voltage is read out.

The output amplifier 6 amplifies and outputs signal voltages read out to the horizontal signal line 5 by the above-described horizontal scanning circuit 4, and is connected to one end of the horizontal signal line 5. Regarding this output amplifier 6, four of the charge-detecting circuits 3 are made to be one group and one output amplifier 6 is provided for each group, for example. In this case, the number of output amplifiers 6 is a quarter of the number of charge-detecting circuits 3.

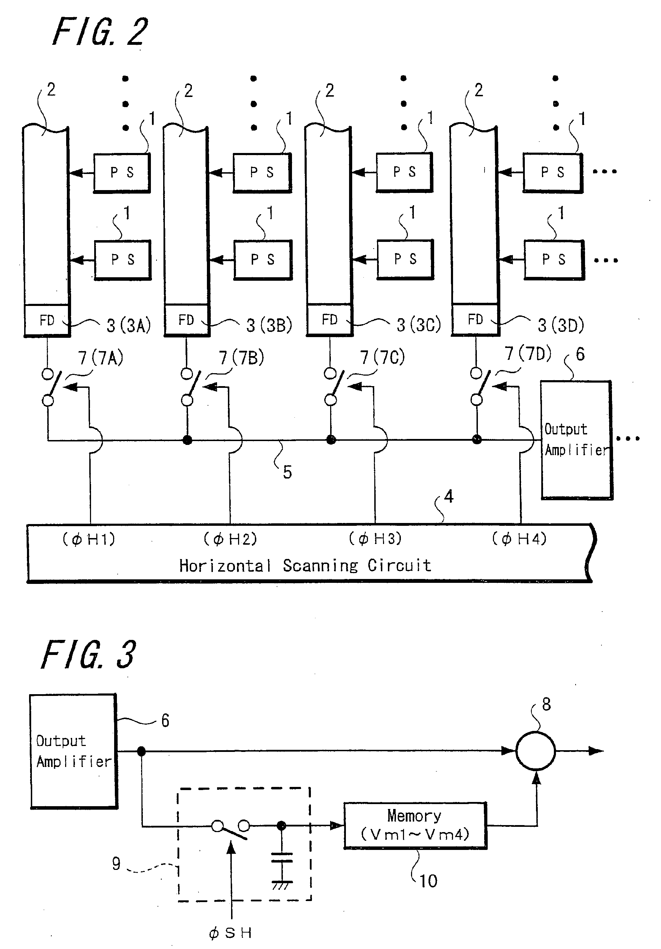

A specific example of a configuration from the charge-detecting circuits 3 to the output amplifier 6 is shown in FIG. 2. As shown in the figure, four charge-detecting circuits (FD) 3 are connected to a common horizontal signal line 5 through corresponding switches 7. Each of switches 7 performs a switching operation (ON/OFF operation) in accordance with a horizontal scanning pulse ϕHn (n is an integer of one or above) output from the horizontal scanning circuit 4. These switches 7 are each connected between the charge-detecting circuits 3 and the horizontal signal line 5. Note that in the following explanations, the four charge-detecting circuits 3 and the corresponding four switches 7 are termed 3A, 3B, 3C, 3D, and 7A, 7B, 7C, 7D respectively so as to be discriminated.

In the above-described configuration shown in FIG. 2, a horizontal scanning pulse ϕHn for horizontal scanning is output from the horizontal scanning circuit 4 to the switches 7A, 7B, 7C, 7D in order. On this occasion, when a horizontal scanning pulse ϕH1 is output from the horizontal scanning circuit 4, the corresponding switch 7A performs a switching operation (turns ON). Thus, a signal voltage.is read out from the charge-detecting circuit 3A to the horizontal signal line 5, and this signal voltage is amplified in the output amplifier 6 to be output.

Similarly, when a horizontal scanning pulse ϕH2 is output from the horizontal scanning circuit 4, the corresponding switch 7B performs a switching operation (turns ON); thus, a signal voltage is read out from the charge-detecting circuit 3B to the horizontal signal line 5, and this signal voltage is amplified in the output amplifier 6 to be output. Further, when a horizontal scanning pulse ϕH3 is output from the horizontal scanning circuit 4, the corresponding switch 7C performs a switching operation (turns ON); thus, a signal voltage is read out from the charge-detecting circuit 3C to the horizontal signal line 5, and this signal voltage is amplified in the output amplifier 6 to be output. Further, when a horizontal scanning pulse ϕH4 is output from the horizontal scanning circuit 4, the corresponding switch 7D performs a switching operation (turns ON); thus, a signal voltage is read out from the charge-detecting circuit 3D to the horizontal signal line 5, and this signal voltage is amplified in the output amplifier 6 to be output.

FIG. 3 is a figure showing an example of a configuration for correcting the output level of a signal voltage output from an output amplifier. In FIG. 3, to the output terminal of the output amplifier 6 is connected one input terminal of a signal processing circuit 8. Further, between the output terminal of the output amplifier 6 and the other input terminal of the signal processing circuit 8, a sample-hold circuit (hereinafter termed an S/H circuit) 9 and a memory 10 are connected in series.

The S/H circuit 9 samples a signal voltage output from the output amplifier 6 in accordance with a sample-hold pulse (ϕSH). The memory 10 stores as a memory voltage a signal voltage sampled in the S/H circuit 9 and is equivalent to memory means in the present invention. In this memory 10, a plurality of memory voltages are stored corresponding to timings of sampling. On storing memory voltages in the memory 10, signal voltages output from the output amplifier 6 are read out in order from the plurality of charge-detecting circuits 3 to the horizontal signal line 5 by the horizontal scanning circuit 4, without the charge transfer portions 2 transferring (vertically transferring) signal charges. Hereupon, the transfer of signal charges by the charge transfer portions 2 can be controlled not to be performed by suspending the output of vertical transfer pulses to the charge transfer portions 2.

Here, signal voltages corresponding to the four charge-detecting circuits 3A, 3B, 3C, 3D are read out from one output amplifier 6 in order by the horizontal scanning circuit 4 in accordance with the above-described configuration shown in FIG. 2, and each signal voltage is sequentially sampled by a sample-hold pulse ϕSH. Correspondingly, after a predetermined period of time started from a rise of a sample-hold pulse ϕSH has passed (before the next sample-hold pulse ϕSH rises), the memory 10 reads out a signal voltage held in the S/H circuit 9 to be written into a predetermined memory area. Further, the memory 10 writes a signal voltage (memory voltage) in synchronization with a sample-hold pulse ϕSH. Therefore, in the memory 10, a memory voltage Vm1 read out from the charge-detecting circuit 3A and then sampled, a memory voltage Vm2 read out from the charge-detecting circuit 3B and then sampled, a memory voltage Vm3 read out from the charge-detecting circuit 3C and then sampled, and a memory voltage Vm4 read out from the charge-detecting circuit 3D and then sampled are stored (written) separately.

The signal processing circuit 8 executes predetermined signal processing, using signal voltages output from the output amplifier 6 and memory voltages stored in the memory 10. In this case, signal voltages output from the output amplifier 6 are the ones read out from the plurality of charge-detecting circuits 3 to the horizontal signal line 5 in order by the horizontal scanning circuit 4, with transferring (vertically transferring) signal charges read out from the photosensors 1 to the charge transfer portions 2.

The signal processing circuit 8 executes arithmetic processing using signal voltages output from the output amplifier 6 and memory voltages stored in the memory 10, as one of the above-described signal processing. In this arithmetic processing, the signal processing circuit 8 corrects the level (black level in particular) of signal voltages output from the output amplifier 6, and signal voltages after this correction (hereinafter called corrected signal voltages) are output from the output terminal thereof. Specifically, by means of arithmetic processing using signal voltages output from the output amplifier 6 and memory voltages (Vm1, Vm2, Vm3, Vm4) read out from the memory 10, the signal processing circuit 8 calculates the difference values between those signal voltages, and the difference values (arithmetic processing results) are output as corrected signal voltages.

Further, it is desirable that the above-described photosensors 1, charge transfer portions 2, charge-detecting circuits 3, horizontal scanning circuit 4,signal processing circuit 8 and memory 10 be formed on the same semiconductor chip. However, it is also possible to form the photosensors 1, charge transfer portions 2, charge-detecting circuits 3 and horizontal scanning circuit 4 on the same semiconductor chip, and to form the signal processing circuit 8 and memory 10 outside the semiconductor chip.

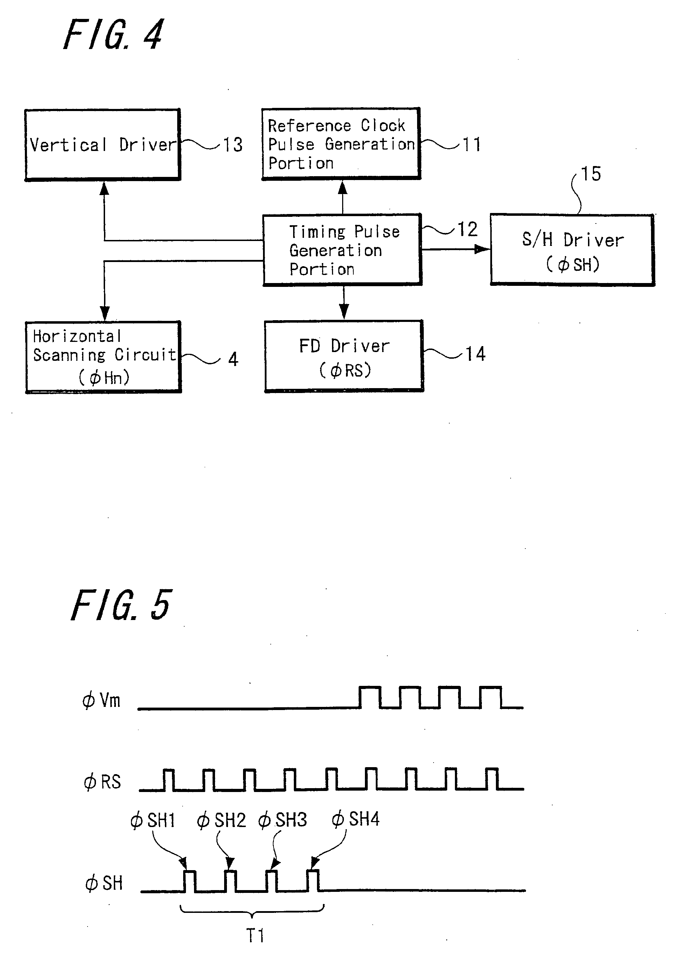

FIG. 4 is a block diagram showing an example of a configuration for timing control. In FIG. 4, a reference clock pulse generation portion 11 generates a reference clock pulse at constant intervals. A timing pulse generation portion 12 generates various kinds of timing pulses (timing pulses for vertical transfer, timing pulses for horizontal scanning, timing pulses for FD drive, timing pulses for S/H circuit drive, and the like), using reference clock pulse signals generated from the reference clock pulse.

A vertical driver 13 generates a vertical transfer pulse (ϕVm) in accordance with a timing pulse for vertical transfer, which is input from the timing pulse generation portion 12, and then drives a charge transfer portion (vertical CCD) 2 using this vertical transfer pulse. A horizontal scanning circuit 4 generates a horizontal scanning pulse (ϕHn) in accordance with a timing pulse for horizontal scanning, which is input from the timing pulse generation portion 12, and then selectively scans each of charge-detecting circuits 3 in order using this horizontal scanning pulse.

An FD driver 14 generates an FD reset pulse (ϕRS) in accordance with a pulse for FD drive, which is input from the timing pulse generation portion 12, and then drives each of charge-detecting circuits (FD) 3 using this FD reset pulse. An S/H driver 15 generates a sample-hold pulse (ϕSH) in accordance with a pulse for S/H drive, which is input from the timing pulse generation portion 12, and then drives an S/H circuit 9 using this sample-hold pulse.

Next, operations of an imaging device, based on various kinds of timing pulses generated in the timing pulse generation portion 12 are explained, referring to the timing charts of FIGS. 5 to 7.

First, in FIG. 5, the FD driver 14 outputs FD reset pulses ϕRS at constant intervals, and the S/H driver 15 outputs sample-hold pulses ϕSH approximately in the middle of the interval of the FD reset pulses ϕRS. Regarding the sample-hold pulse ϕSH, four pulses (ϕSH1, ϕSH2, ϕSH3, ϕSH4) are output in chronological order to the above-described S/H circuit 9 shown in FIG. 3. During a period in which the sample-hold pulses ϕSH are output (hereinafter called an SH pulse output period) T1, the vertical driver 13 outputs no vertical transfer pulse ϕVm. Therefore, the SH pulse output period T1 is a period in which a transfer (vertical transfer) of a signal charge by the charge transfer portion 2, including the readout of a signal charge from the charge transfer portion 2 to the charge-detecting circuit 3, does not take place.

However, during the SH pulse output period T1, FD reset pulses ϕRS and horizontal scanning pulses ϕHn are continuously output. Accordingly, during the SH pulse output period T1, signal voltages from each of charge-detecting circuits 3 are read out to the horizontal signal line 5 in order by the horizontal scanning circuit 4, and these readout signal voltages are amplified in the output amplifier 6 to be output, without charge transfer portions 2 transferring signal charges. On this occasion, the readout of a signal voltage from each of the charge-detecting circuits 3 to the horizontal signal line 5 is executed in accordance with a horizontal scanning pulse ϕHn output from the horizontal scanning circuit 4.

After that, when the output of the sample-hold pulses ϕSH by the S/H driver 15 is completed, the vertical driver 13 starts outputting vertical transfer pulses ϕVm (ϕV1, ϕV2, ϕV3, ϕV4, ··· ). Thus, a signal charge read out from each photosensor 1 to a charge transfer portion 2 is transferred by the charge transfer portion 2 in synchronization with a vertical transfer pulse ϕVm and is read out from the charge transfer portion 2 to the charge-detecting circuit 3. Further, a signal charge read out to each of the charge-detecting circuit 3 is converted to a signal voltage in the relevant charge-detecting circuit 3 and subsequently is read out to the output amplifier 6 in order in accordance with a horizontal scanning pulse ϕHn output from the horizontal scanning circuit 4. Therefore, during a period in which vertical transfer pulses ϕVm are output, with transferring (vertically transferring) signal charges read out from the photosensors 1 to the charge transfer portions 2, signal voltages from each of the charge-detecting circuits 3 are read out to the horizontal signal line 5 in order by the horizontal scanning circuit 4, and the signal voltages read out are amplified in the output amplifier 6 to be output. In this case, if the charge transfer portion 2 includes a CCD structure, the transfer of signal charges by the charge transfer portions 2 is signal charge transfer performed by CCDs. Further, the readout of a signal voltage from each of the charge-detecting circuits 3 to the horizontal signal line 5 is executed in accordance with a horizontal scanning pulse ϕHn output from the horizontal scanning circuit 4.

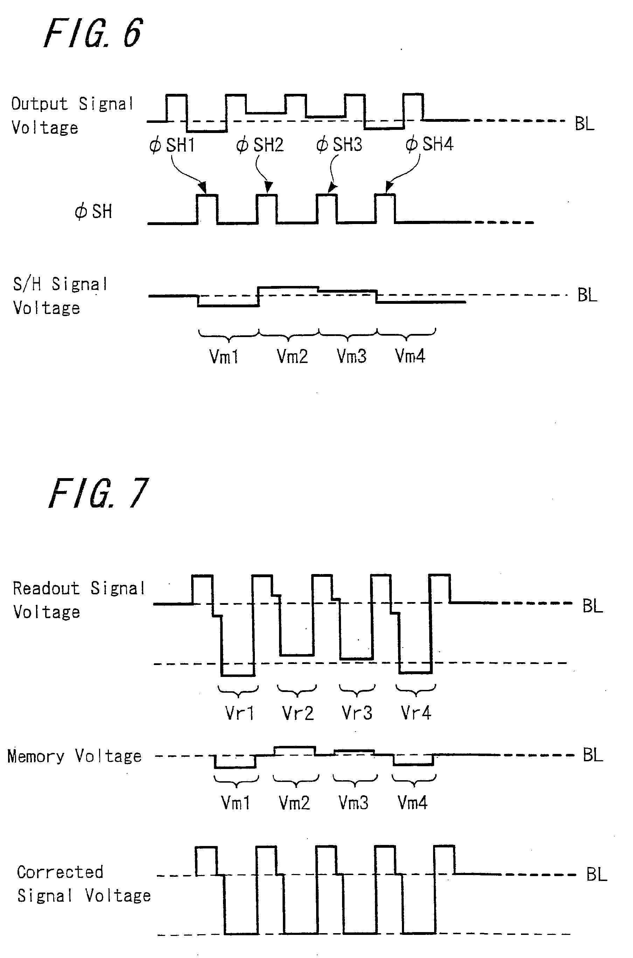

On the other hand, signal voltages read out to the output amplifier 6 are amplified by the relevant output amplifier 6 and subsequently are output from the relevant output amplifier 6. Here, in the above-described SH pulse output period T1, if the output waveform of signal voltages output from the output amplifier 6 is a waveform shown in the upper part of FIG. 6, signal voltages (SH signal voltages) obtained when the S/H circuit 9 samples these signal voltages using the sample-hold pulses ϕSH (shown in the middle part of FIG. 6) will be such a waveform as shown in the lower part of FIG. 6.

Specifically, the black level of signal voltages output from the output amplifier 6 deviates from a black level BL to be a reference (hereinafter termed a reference black level) due to dispersion in characteristics (dispersion in gain and the like) of the charge-detecting circuits 3 connected to the charge transfer portions 2 in respective column. Therefore, the level of SH signal voltages also deviates from the reference black level BL due to dispersion in characteristics of each of the charge-detecting circuits 3 (charge-detecting circuits 3A, 3B, 3C, 3D shown in FIG. 2). SH signal voltages thus obtained are stored (written) in the memory 10 for respective timings of sampling.

Specifically, the voltage value of an SH signal voltage sample-held by a sample-hold pulse ϕSH1 is stored in the memory 10 as a memory voltage Vm1. Similarly, the voltage value of an SH signal voltage sample-held by a sample-hold pulse ϕSH2, the voltage value of an SH signal voltage sample-held by a sample-hold pulse ϕSH3, and the voltage value of an SH signal voltage sample-held by a sample-hold pulse ϕSH4 are stored sequentially in the memory 10 as a memory voltage Vm2, a memory voltage Vm3 and a memory voltage Vm4, respectively.

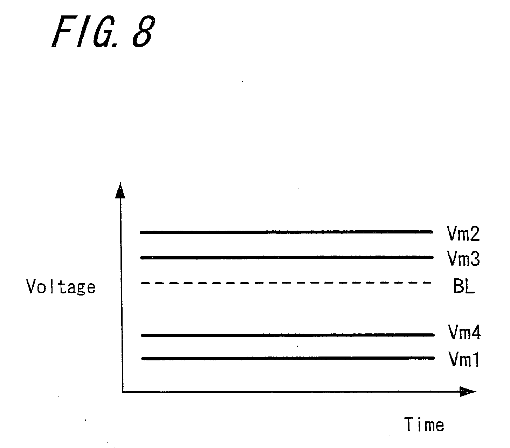

Thus, in the memory 10 are stored those four memory voltages (Vm1, Vm2, Vm3, Vm4) as shown in FIG. 8. The levels of the memory voltages Vm1, Vm2, Vm3, Vm4 thus stored in the memory 10 depend on dispersion in characteristics of the charge-detecting circuits 3A, 3B, 3C, 3D, irrespective of the amount of signal charges read out from the photosensors 1. Specifically, the level of the memory voltage Vm1 depends on dispersion in characteristics of the charge-detecting circuit 3A, the level of the memory voltage Vm2 depends on dispersion in characteristics of the charge-detecting circuit 3B, the level of the memory voltage Vm3 depends on dispersion in characteristics of the charge-detecting circuit 3C, and the level of the memory voltage Vm4 depends on dispersion in characteristics of the charge-detecting circuit 3D. Accordingly, the memory voltages (Vm1, Vm2, Vm3, Vm4) stored in the memory 10 only include output errors (deviations from the reference black level BL) due to dispersion in characteristics of the charge-detecting circuits (3A, 3B, 3C, 3D).

Note that, the above-described reference black level BL represents a black level of a signal voltage to be output from an output amplifier 6 when, with no signal charge stored in a photosensor 1, a signal charge is read out from the relevant photosensor 1 to be transferred by a charge transfer portion 2, and this signal charge transferred is voltage-converted in a charge-detecting circuit 3 to be read out to the relevant output amplifier 6.

On the other hand, after starting the output of vertical transfer pulses ϕVm (in other words, after starting the transfer of signal charges by the charge transfer portions 2), if signal voltages read out from each of the charge-detecting circuits 3 in order and then output from the output amplifier 6 (hereinafter termed readout signal voltages) are, for example, the one shown in the upper part of FIG. 7, these readout signal voltages are input to one input terminal of a signal processing circuit 8. Hereupon, the level of readout signal voltages output from the output amplifier 6 are shown assuming that all the amount of signal charges read out from the photosensors 1 is the same. On this occasion, to the other input terminal of the signal processing circuit 8 are input memory voltages read out from the memory 10 concurrently with the input of readout signal voltages to the relevant signal processing circuit 8.

The input of readout signal voltages from the output amplifier 6 to the signal processing circuit 8 and the input of memory voltages from the memory 10 to the signal processing circuit 8 are executed in synchronization with each other. Specifically, on the input of a readout signal voltage Vr1 from the output amplifier 6 to the signal processing circuit 8, a memory voltage Vm1 is input from the memory 10 to the signal processing circuit 8 in synchronization with the input. Similarly, on the input of a readout signal voltage Vr2 from the output amplifier 6 to the signal processing circuit 8, a memory voltage Vm2 is input from the memory 10 to the signal processing circuit 8 in synchronization with the input; on the input of a readout signal voltage Vr3 from the output amplifier 6 to the signal processing circuit 8, a memory voltage Vm3 is input from the memory 10 to the signal processing circuit 8 in synchronization with the input;and on the input of a readout signal voltage Vr4 from the output amplifier 6 to the signal processing circuit 8, a memory voltage Vm4 is input from the memory 10 to the signal processing circuit 8 in synchronization with the input.

Among these, the readout signal voltage Vr1 is a signal voltage read out from the charge-detecting circuit 3A and then output from the output amplifier 6, and the readout signal voltage Vr2 is a signal voltage read out from the charge-detecting circuit 3B and then output from the output amplifier 6. Further, the readout signal voltage Vr3 is a signal voltage read out from the charge-detecting circuit 3C and then output from the output amplifier 6, and the readout signal voltage Vr4 is a signal voltage read out from the charge-detecting circuit 3D and then output from the output amplifier 6. The levels of the readout signal voltages Vr1, Vr2, Vr3, Vr4 depend on both the amount of signal charges read out from the photosensors 1 and dispersion in characteristics of the charge-detecting circuits 3A, 3B, 3C, 3D.

On the input of a readout signal voltage and a memory voltage in this manner, arithmetic processing (signal processing) using those voltages is executed in the signal processing circuit 8. The arithmetic processing in the signal processing circuit 8 is executed such that the black level of readout signal voltages will correspond with the reference black level BL. Specifically, for example, if a readout signal voltage Vr1 is input from the output amplifier 6 to the signal processing circuit 8, and a memory voltage Vm1 is input from the memory 10 to the signal processing circuit 8 in synchronization with the input, one signal voltage (for example, the readout signal voltage Vrl) is made a positive voltage while the other signal voltage (for example, the memory voltage Vm1) is made a negative voltage, the difference between the voltages is calculated in the signal processing circuit 8, and the calculation result (difference voltage) is output as a corrected signal voltage. Thus, from signal components output from the output amplifier 6 as a result of the readout of signal charges from the photosensors 1 and the transfer of signal charges by the charge transfer portions 2, output error components due to dispersion in characteristics of the charge-detecting circuits 3A, 3B, 3C, 3D can be removed and then output.

The above-described arithmetic processing (signal processing) is repeatedly executed in the signal processing circuit 8 in the case where a readout signal voltage Vr2 and a memory voltage Vm2 are input, in the case where a readout signal voltage Vr3 and a memory voltage Vm3 are input, and further, in the case where a readout signal voltage Vr4 and a memory voltage Vm4 are input, respectively. Thus, as described above, if all the amount of signal charges read out from the photosensors 1 is the same, the black level of correction signal voltages output from the signal processing circuit 8 corresponds with the reference black level BL, and readout signal levels correspond with each other, as shown in the lower part of FIG. 7.

Therefore, if there is dispersion in characteristics of the charge-detecting circuits 3, output errors caused by the dispersion in characteristics can be corrected appropriately. Further, if there is dispersion in characteristics of each of the output amplifiers 6, output errors caused by the dispersion in characteristics can be corrected in an appropriate manner. Further, other than the charge-detecting circuits 3 and the output amplifier 6, if there is dispersion in characteristics of the circuit part (wiring and the like) from the charge-detecting circuits 3 to the output amplifier 6, output errors caused by the dispersion in characteristics can be corrected in an appropriate manner. As a result, noise in a stripe pattern can be reliably prevented from occurring in an output image.

It should be noted that in the above-described embodiment, four charge-detecting circuits 3 are made to be one group, and one output amplifier 6 is provided for each group; however, the present invention is not limited thereto, and the number of charge-detecting circuits 3 constituting one group may be more than or less than four. Further, if the number of charge-detecting circuits 3 constituting one group is four or more, output amplifiers 6 may be provided with a corresponding relation of 1:1 to charge-detecting circuits 3. Further, if the number of charge-detecting circuits 3 constituting one group is less than four, signal voltages of all the charge-detecting circuits 3 may be amplified in one common output amplifier 6 to be output.

Further, an imaging device according to the present invention can be installed in mobile phone units, PDAs (personal digital assistants) and the like.

### DESCRIPTION OF REFERENCE NUMERALS

- 1: PHOTOSENSOR
- 2: CHARGE TRANSFER PORTION
- 3: CHARGE-DETECTING CIRCUIT
- 4 .: HORIZONTAL SCANNING CIRCUIT
- 5: HORIZONTAL SIGNAL LINE
- 6: OUTPUT AMPLIFIER
- 7: SWITCH
- 8: SIGNAL PROCESSING CIRCUIT
- 9: S/H CIRCUIT
- 10: MEMORY

## Claims

1. An imaging device comprising:
a photoelectric conversion portion which photoelectrically converts light received;
a charge transfer portion which transfers signal charges read out from said photoelectric conversion portion;
a plurality of charge-detecting means which perform voltage-conversion on signal charges from said charge transfer portion;
scanning means which read out signals voltage-converted by said plurality of charge-detecting means;
output means which output signals read out by said scanning means;
memory means which, without the transfer of signal charges by said charge transfer portion, store signals read out from said plurality of charge-detecting means by said scanning means and output from said output means; and
signal processing means which, with the transfer of signal charges read out from said photoelectric conversion portion to said charge transfer portion, execute predetermined signal processing using signals read out from said plurality of charge-detecting means by said scanning means and output from said output means and signals stored in said memory means.

2. An imaging device according to claim 1,
wherein said photoelectric conversion portion, said charge transfer portion, said charge-detecting means, said scanning means, said memory means and said signal processing means are formed on the same semiconductor chip.

3. An imaging device according to claim 1,
wherein said photoelectric conversion portion, said charge transfer portion, said charge-detecting means and said scanning means are formed on the same semiconductor chip, and said memory means and said signal processing means are formed outside said semiconductor chip.

4. An imaging device according to claim 1,
wherein said charge transfer portion includes a CCD structure.

5. An imaging device according to claim 1,
wherein said signal processing means executes, as said predetermined signal processing, arithmetic processing using signals read out from said plurality of charge-detecting means by said scanning means and output from said output means and signals stored in said memory means.

6. An imaging device according to claim 5,
wherein said signal processing means calculates the difference value of signals by means of said arithmetic processing, and the difference value is output as a corrected signal.

7. An imaging device according to claim 1,
wherein said scanning means read out in order said signals voltage-converted.

8. An imaging device according to claim 1, further comprising a sample-hold circuit between said output means and said memory means.

9. A drive method of an imaging device including a photoelectric conversion portion which photoelectrically converts light received, a charge transfer portion which transfers signal charges read out from said photoelectric conversion portion, a plurality of charge-detecting means which perform voltage-conversion on signal charges from said charge transfer portions, scanning means which read out signals voltage-converted by said plurality of charge-detecting means, and output means which output signals read out by said scanning means, comprising the steps of:
storing signals read out from said plurality of charge-detecting means by said scanning means and output from said output means, without the transfer of signal charges by said charge transfer portion; and
executing predetermined signal processing, using signals read out from said plurality of charge-detecting means by said scanning means and output from said output means and signals stored in said memory means, with the transfer of signal charges read out from said photoelectric conversion portion to said charge transfer portion.

10. A drive method of an imaging device according to claim 9,
wherein the transfer of signal charges by said charge transfer portion is charge transfer by a CCD.

11. A drive method of an imaging device according to claim 9,
wherein in said signal processing step, arithmetic processing is executed as said predetermined signal processing.

12. A drive method of an imaging device according to claim 11,
wherein in said signal processing step, the difference value of signals is calculated by means of said arithmetic processing, and the difference value is output as a corrected signal.

13. A drive method of an imaging device according to claim 9,
wherein said scanning means read out in order said signals voltage-converted.
